# EUROPÄISCHE PATENTSCHRIFT

(11) **EP 0 894 213 B1**
(45) Veröffentlichungstag und Bekanntmachung des Hinweises auf die Patenterteilung: **05.09.2001**
(21) Anmeldenummer: 97921653.8
(22) Anmeldetag: 17.04.1997
(51) Int. Cl.: F16J 15/32, B60T 11/236

(54) **RINGFÖRMIGES DICHTELEMENT**
RING-SHAPED SEALING ELEMENT
ELEMENT D'ETANCHEITE ANNULAIRE

(30) Priorität: 17.04.1996 DE 19615157
(43) Veröffentlichungstag der Anmeldung: 03.02.1999
(73) Patentinhaber: Lucas Industries Limited, London W1Y 4DJ (GB); ContiTech Vibration Control GmbH, 30422 Hannover (DE)
(72) Erfinder: STRUSCHKA, Martin, D-56112 Lahnstein (DE); BEIER, Ulrich, D-37154 Northeim (DE)
(74) Vertreter: Beyer, Andreas, Dr.
(86) Internationale Anmeldenummer: EP9701927
(87) Internationale Veröffentlichungsnummer: WO9739263

(56) Entgegenhaltungen:
- EP-A- 0 519 533
- US-A- 3 282 594
- US-A- 4 281 590

## Beschreibung

Die Erfindung betrifft ein ringförmiges Dichtelement gemäß dem Oberbegriff des Anspruchs 1.

Dichtelemente mit einem starrem Stützbauteil und einem darauf angeordneten Elastomerteil sind grundsätzlich bekannt. Im Zusammenwirken mit Ventilgliedern existiert das Problem, daß der Öffnungs- und Schließzeitpunkt eines Ventils nicht genau definiert ist, da das Teil des Ventils, welches durch seine Verschiebung ein Öffnen und Schließen des Ventils bewirkt, sich abhängig vom auf es wirkenden Fluiddruck mehr oder weniger weit in das Elastomermaterial des Dichtelements hineindrückt, wodurch der Öffnungs- und Schließzeitpunkt des Ventils variiert. Dies ist bei vielen Anwendungen unerwünscht, da das Ventil ein gleichbleibendes, genau definiertes Öffnungs- und Schließverhalten aufweisen soll.

Aus der EP-A-519 533 ist ein Dichtelement gemäß dem Oberbegriff des Anspruchs 1 bekannt. Ähnliche Dichtelemente sind aus der GB 2 256 687 A sowie aus der US 3 282 594 bekannt. Allen diesen Dichtelementen ist gemeinsam, daß der Elastomerbestandteil des Dichtelementes einstückig mit dem starren Stützkörper zusammengespritzt ist. Damit soll eine gute Abdichtung zwischen dem Elastomermaterial und dem Material des starren Stützkörpers sichergestellt werden.

Der Erfindung liegt die Aufgabe zugrunde, ein ringförmiges Dichtelement bereitzustellen, daß dazu geeignet ist, mit einem verschiebbaren Ventilkörper eines Ventils zusammenzuwirken und insbesondere ein möglichst gleichbleibendes Öffnungs- und Schließverhalten des Ventils zu gewährleisten. Mit Hinblick auf einen Einsatz in der Großserienfertigung soll das Dichtelement darüber hinaus kostengünstig zu fertigen sein, ohne daß die Dichtfunktion des Dichtelements dadurch nachteilig beeinflußt wird.

Diese Aufgabe ist, ausgehend von einem ringförmigen Dichtelement der eingangs genannten Art, erfindungsgemäß dadurch gelöst, daß das Teil aus starrem Material und das Teil aus Elastomermaterial lösbar miteinander verbunden sind, die Wanddicke Sᵢ etwa gleich der Wanddicke Sₐ ist, und die Radialerstreckung S des Vorsprungs höchstens 70 % der Summe der Wanddicken Sᵢ + Sₐ beträgt. Mit "nahezu vollständig durchsetzt" ist hier gemeint, daß sich das axiale, freie Ende des auf dem Teil aus starrem Material ausgebildeten, ringförmig umlaufenden Vorsprunges nicht in der Stirnfläche des Elastomerteils befindet, sondern etwas darunter, d.h., daß das Elastomerteil, welches den Vorsprung überdeckt, letzteren überragt. Durch die so geschaffene, auf dem stirnseitigen freien Ende des Vorsprungs aufliegende dünne Elastomerschicht ist gewährleistet, daß sich ein beweglicher Ventilkörper immer weich und leicht gedämpft an die ihm zugewandte Stirnseite des Dichtelements anlegen und sich anschließend nach einer vernachlässigbaren Kompressionsphase praktisch verzögerungsfrei auf dem am Teil aus starrem Material ausgebildeten Vorsprung abstützen kann. Aufgrund der so erzielten Abstützung ist ein definiertes Öffnen des Ventils unabhängig von dem Druck sichergestellt, gegen den das Ventil geöffnet werden muß.

Die beschriebene Ausbildung des erfindungsgemäßen Dichtelements führt zu einem quasi starren Anschlag für den verschiebbaren Ventilkörper, ohne daß deshalb die Dichtungsfunktion des Dichtelements leidet. Im Gegenteil ist durch die vollständige Überdeckung des am starren Teil des Dichtelements ausgebildeten Vorsprungs durch das Elastomerteil eine hervorragende Dichtheit auch unter kritischen Bedingungen gesichert. Da die größte Radialerstreckung des umlaufenden Vorsprungs nur etwa höchstens 70 % der Summe der Wanddicken Sᵢ and Sₐ beträgt und die Wanddicken Sᵢ und Sₐ etwa gleich sind, verbleibt radial innerhalb und radial außerhalb des Vorsprungs genügend Elastomermaterial für eine gute, auch radial elastische Abdichtung. Bevorzugt beträgt die Radialerstreckung des umlaufenden Vorsprungs nur höchstens etwa 50 % der Summe der Wanddicken Sᵢ + Sₐ.

Der ringförmig umlaufende Vorsprung des Teils aus starrem Material kann beispielsweise die Form eines geschlossenen Kreisrings aufweisen. Alternativ kann der ringförmig umlaufende Vorsprung durch mehrere Kreisringsegmente gebildet sein, zwischen denen Platz für Verbindungsstege gelassen ist. Gemäß einer weiteren Abwandlung kann zumindest das freie Ende des ringförmig umlaufenden Vorsprungs von einer Reihe stiftförmiger Fortsätze gebildet sein, die in Umfangsrichtung voneinander vorzugsweise gleichmäßig beabstandet sind und die sich axial erstrecken. Der quasi starre Anschlag wird bei einer solchen Ausführungsform durch eine kreisringförmige Anordnung angenähert punktförmiger Anlageflächen gebildet.

Gemäß einer Ausgestaltung weist das Elastomerteil auf seiner freien Stirnfläche mehrere in Umfangsrichtung voneinander beabstandete, vorzugsweise kalottenförmige Erhebungen auf. Mit einer solchen Ausgestaltung wird ein noch sanfteres, besser gedämpftes Ineingriffkommen des verschiebbaren Ventilkörpers mit dem Dichtelement erzielt, da der Ventilkörper zu Beginn des Ineingriffkommens nur punktweise mit dem Elastomerteil in Berührung tritt, anschließend jedoch sofort auf einen schnell zunehmenden Widerstand stößt. Wenn der am starren Teil des Dichtelements vorhandene, ringförmig umlaufende Vorsprung durch eine Reihe stiftförmiger Fortsätze gebildet ist, sind die vorzugsweise kalottenförmigen Erhebungen auf der freien Stirnfläche des Elastomerteils bevorzugt über den stiftförmigen Fortsätzen, d.h. in axialer Fortsetzung derselben angeordnet.

Unabhängig von der Ausbildung des ringförmig umlaufenden Vorsprungs verringert sich bevorzugt die Radialerstreckung des Vorsprungs zu dessen freiem Ende hin. Dabei kann die Verringerung der Radialerstreckung des Vorsprungs kontinuierlich oder auch stufenweise erfolgen. Durch die Verringerung der Ra-dialerstrekkung wird eine noch bessere Dichtwirkung erreicht, da zum freien Ende des Vorsprungs hin radial innerhalb und radial außerhalb desselben zunehmend mehr Elastomermaterial vorhanden ist, woraus eine bessere radiale Ausgleichsfähigkeit des Dichtelements im Bereich seines Elastomerteils resultiert.

Bevorzugt weist das Teil aus starrem Material des Dichtelements auf seiner von dem Teil aus Elastomermaterial abgekehrten Stirnseite einen hohlzylindrischen Fortsatz auf. Dieser Fortsatz dient zur besseren Führung des verschiebbaren Kolbens.

Um auch bei höherem Druck eine gute Dichtwirkung des Dichtelements zu gewährleisten, soll dessen Teil aus starrem Material im Bereich der Fläche, mit der es am Teil aus Elastomermaterial anliegt, insbesondere keine Durchgangsausnehmungen aufweisen. Bereiche des Elastomerteils könnten sich sonst bei entsprechender Druckbelastung in solche Durchgangsausnehmungen eindrücken, wodurch Elastomermaterial an anderen Dichtstellen fehlen würde.

Das erfindungsgemäße ringförmige Dichtelement eignet sich besonders für einen Einsatz in einem Hauptzylinder einer hydraulischen Fahrzeugbremsanlage. Ein solcher Hauptzylinder, der oft auch Hauptbremszylinder genannt wird, hat ein Gehäuse mit einer sich entlang einer Längsachse erstreckenden Bohrung, deren eines Ende von einer zum Gehäuse des Hauptzylinders gehörenden Stirnwand und deren anderes, gegenüberliegendes Ende durch ein ringförmiges Dichtelement verschlossen ist. Durch das Dichtelement hindurch ist ein konzentrisch zur Bohrung angeordneter, axial verschiebbarer Kolben abdichtend geführt, der ein Zentralventil aufweist, das eine Fluidverbindung zwischen einem Fluidreservoir und einer in der Bohrung durch die Stirnwand und den Kolben begrenzten Druckkammer ermöglicht. Das Zentralventil ist bei unbetätigtem Kolben durch ein auf das Dichtelement wirkendes Anlagebauteil in Offenstellung gehalten. Ein Hauptzylinder, bei dem das ringförmige Dichtelement aus zwei separaten, kreisringförmigen und sich axial aneinander anschließenden Teilen gebildet ist, von denen das erste, der Bohrung zugekehrte Teil aus einem Elastomermaterial und das zweite von der Bohrung abgewandte Teil aus einem starren Material besteht, ist aus der EP 0 467 021 A1 bekannt.

Hauptzylinder dieser Art werden in Fahrzeugen vor allem zusammen mit Bremsdruckregelsystemen verwendet, wobei diese Bremsdruckregelsysteme heutzutage häufig sowohl die Funktion haben, ein Blockieren der Fahrzeugräder beim Bremsen zu verhindern (sogenanntes Antiblockiersystem), als auch die Funktion haben, ein Durchdrehen der Antriebsräder beim Beschleunigen insbesondere auf rutschigem Untergrund zu verhindern (sogenannte Antischlupfregelung). Wie bereits erwähnt, wird das in dem Kolben angeordnete Zentralventil im unbetätigten Zustand des Hauptzylinders, d.h. wenn sich der Kolben in seiner Ruhe-bzw. Ausgangsstellung befindet, durch ein mit dem Zentralventil verbundenes Anlagebauteil offengehalten, welches sich direkt oder indirekt an der ihm zugewandten Stirnfläche des zum Verschlußelement gehörenden Teils aus Elastomermaterial abstützt.

Geöffnet wird das Zentralventil, indem das mit ihm verbundene Anlagebauteil bei der nach einer Betätigung des Hauptzylinders erfolgenden Rückbewegung des Kolbens in dessen Ausgangsstellung in Anlage mit der dem Anlagebauteil zugewandten Stirnfläche des Verschlußelements gerät und sich dort abstützt, was zum Öffnen des Zentralventils führt. Das bedeutet, daß das Zentralventil gegen den zu diesem Zeitpunkt in der Druckkammer herrschenden Druck geöffnet werden muß. Im normalen Fahrbetrieb ist es häufig so, daß zu dem Zeitpunkt, in dem sich das Anlagebauteil an das Verschlußelement anlegt, kein oder nur ein geringer Überdruck in der Druckkammer vorhanden ist. Unter bestimmten Umständen kann es jedoch dazu kommen, daß das Zentralventil noch gegen einen erheblichen Überdruck geöffnet werden muß, insbesondere dann, wenn direkt anschließend an einen Antischlupfregelzyklus eine Bremsung erforderlich ist und deshalb der Hauptzylinder betätigt wird. In einem solchen Fall hat der im Rahmen der Antischlupfregelung in der Druckkammer des Hauptzylinders aufgebaute Fluiddruck vor der sich direkt anschließenden Bremsbetätigung keine Gelegenheit mehr, sich zu entspannen, da das zusätzliche Fluidvolumen, das während des Antischlupfregelzyklus der Druckkammer zum Druckaufbau zugeführt worden war, aufgrund der sich zeitlich direkt anschließenden Bremsbetätigung nicht in den Fluidvorratsbehälter zurückgeleitet werden kann. Abhängig von dem in der Druckkammer noch vorherrschenden Fluiddruck, variiert jedoch der Öffnungszeitpunkt des Zentralventils, da das mit dem Zentralventil verbundene Anlagebauteil umso tiefer in das Elastomerteil des Verschlußelements eindringt, je höher der in der Druckkammer dann noch vorherrschende Druck ist und sich das Zentralventil erst bei einer entsprechenden, von dem Verschlußelement auf das Anlagebauteil ausgeübten Gegenkraft öffnen kann. Eine klare Definition des Öffnungszeitpunktes des Zentralventils in bezug auf den in der Bohrung des Hauptzylinders angeordneten Kolben ist somit nicht möglich, stattdessen öffnet das Zentralventil abhängig von bestimmten Betriebsbedingungen einmal früher und einmal später. Dies ist aus Gründen eines möglichst gleichbleibenden Bremsansprechverhaltens unerwünscht.

Zwei Ausführungsbeispiele eines erfindungsgemäßen Dichtelementes werden im folgenden anhand der beigefügten Figuren näher erläutert. Es zeigt:
- Fig. 1: einen Längsschnitt durch den Endabschnitt eines Hauptzylinders in vergrößerter Darstellung, in dem eine erste Ausführungsform eines erfindungsgemäßen Dichtelementes zum Einsatz kommt,
- Fig. 2: einen Querschnitt durch das in Fig. 1 verwendete Dichtelement in vergrößerter Darstellung, und
- Fig. 3: eine der Fig. 2 entsprechende Ansicht eines gegenüber den Figuren 1 und 2 abgewandelten Dichtelements.

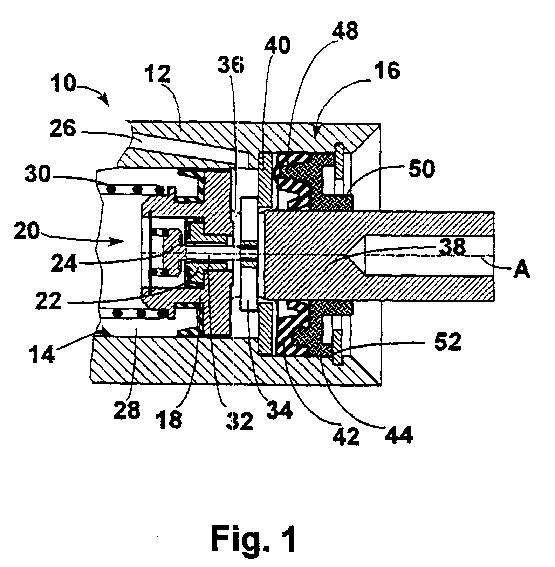

In Fig. 1 ist das krafteingangsseitige Ende eines allgemein mit 10 bezeichneten Hauptzylinders für eine hydraulische Fahrzeug bremsanlage gezeigt. Der Hauptzylinder 10 hat ein langgestrecktes Gehäuse 12 mit einer entlang einer Längsachse A verlaufenden und im dargestellten Ausführungsbeispiel stufenförmig ausgebildeten Bohrung 14. Das hier nicht dargestellte, eine Ende dieser Bohrung 14 ist üblicherweise von einer zum Gehäuse 12 des Hauptzylinders 10 gehörenden Stirnwand dicht verschlossen. Das diesem Ende gegenüberliegende, andere Ende der Bohrung 14 ist wie dargestellt mit einem Verschluß- bzw. Dichtelement 16 abdichtend verschlossen, dessen Aufbau später noch näher erläutert wird.

In der Bohrung 14 ist benachbart zu dem Dichtelement 16 ein durch letzteres hindurch betätigbarer Kolben 18 abdichtend und axial verschieblich aufgenommen. In dem Kolben 18 ist ein Zentralventil 20 mit einem Ventilsitz 22 und einem federnd in Richtung auf den Ventilsitz 22 vorgespannten, axial beweglichen Ventilkörper 24 angeordnet. Das Zentralventil 20 gibt im dargestellten, geöffneten Zustand über eine Nachlaufbohrung 26 eine Fluidverbindung zwischen einem nicht gezeigten, mit der Nachlaufbohrung 26 in Verbindung stehenden Fluidreservoir und einer Druckkammer 28 frei, die in der Bohrung 14 zwischen dem Kolben 18 und dem nicht dargestellten, verschlossenen einen Ende der Bohrung 14 begrenzt ist. Der Kolben 18 ist in der Figur in seiner Ruhe- oder Ausgangsstellung wiedergegeben, die er im unbetätigten Zustand einnimmt und in die er in üblicher Weise durch eine Rückstellfeder 30 vorgespannt wird. Die nicht dargestellten Teile des Hauptzylinders 10 sind von üblicher, bekannter Bauart und werden daher nicht näher erläutert. Neben dem gezeigten Kolben 18 kann sich im nicht dargestellten Teil des Hauptzylinders 10 ein ähnlich aufgebauter, zweiter Kolben befinden, der dann als Sekundärkolben bezeichnet wird.

Der Ventilkörper 24 des Zentralventils 20 hat einen sich durch den Kolben 18 hindurch erstreckenden, stiftförmigen Fortsatz 32, an dessen freiem Ende ein als Anschlagbauteil dienender Querstift 34 befestigt ist. Der Querstift 34 ist mit Spiel in einer radialen Durchgangsausnehmung 36 eines einstückig mit dem Kolben 18 verbundenen Betätigungsfortsatzes 38 verringerten Durchmessers aufgenommen, der sich durch das Dichtelement 16 hindurch erstreckt, aus dem Gehäuse 12 des Hauptzylinders 10 herausragt und zur Verbindung mit einem nicht dargestellten, stangenförmigen Eingangsglied vorgesehen ist. Der Querstift 34 liegt dann, wenn der Kolben 18 die dargestellte Ruhestellung einnimmt, an einer Anschlagringscheibe 40 an, die ihrerseits mit der Stirnfläche eines zum Dichtelement 16 gehörenden Elastomerteils 42 in Berührung steht, so daß das Zentralventil 20 in Offenstellung gehalten ist.

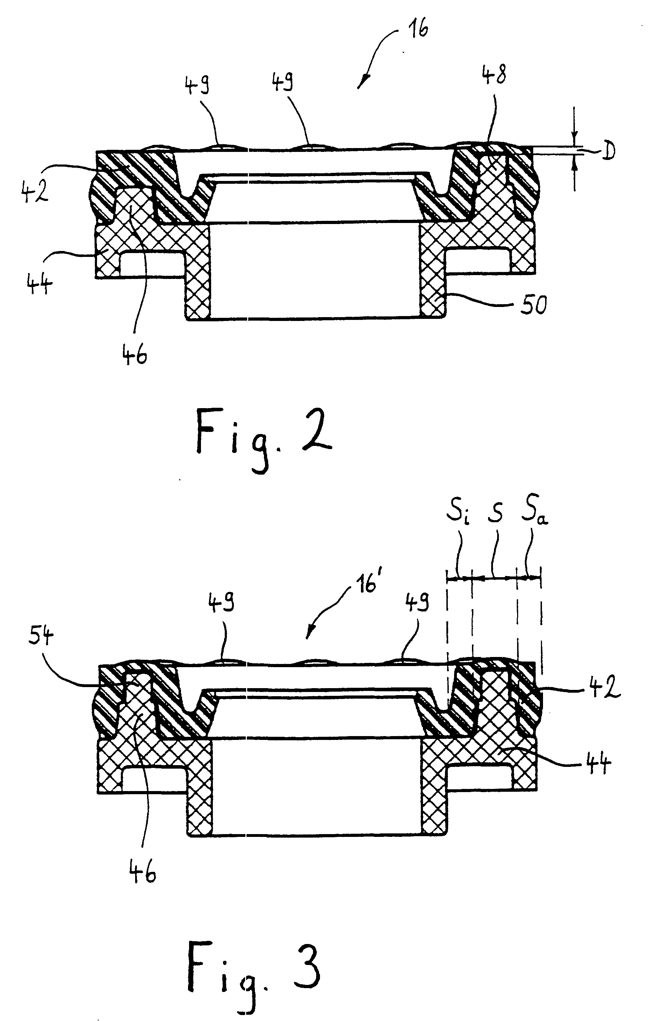

Das Dichtelement 16 weist neben dem kreisringförmig ausgebildeten Elastomerteil 42 ein sich axial daran anschließendes, separat und ebenfalls kreisringförmig ausgebildetes Teil 44 aus starrem Material auf, beispielsweise aus einem geeigneten, harten Kunststoff. Auf seiner dem Elastomerteil 42 zugewandten Stirnfläche weist das Teil 44 aus starrem Material einen ringförmig umlaufenden, sich axial erstreckenden Vorsprung 46 auf, der vollständig von dem Elastomerteil 42 überdeckt wird und der sich im gezeigten Beispiel zu seinem freien Ende hin konisch verjüngt, wobei sein freies Ende entsprechend der in Fig. 1 und Fig. 2 gezeigten ersten Ausführungsform von einer Reihe stiftförmiger Fortsätze 48 gebildet ist, die in Umfangsrichtung voneinander gleichmäßig beabstandet sind und die sich ebenfalls axial erstrecken. Wie besser aus Fig. 2 ersichtlich, ist die Axialerstreckung des Vorsprungs 46 (einschließlich seiner Fortsätze 48) so gewählt, daß das Elastomerteil 42 von dem Vorsprung 46 axial nahezu vollständig durchsetzt ist. Zwischen der mit der Anschlagringscheibe 40 in Berührung stehenden Stirnfläche des Elastomerteils 42 und der stirnseitigen Oberfläche jedes der stiftförmigen Fortsätze 48 befindet sich lediglich eine dünne Elastomerschicht der Dicke D (siehe Fig. 2). Wie aus Fig. 3 ersichtlich ist, hat der an den Vorsprung 46 angrenzende, radial innere Abschnitt des Elastomerteils 42 eine radiale Wanddicke Sᵢ und der an den Vorsprung 46 angrenzende, radial äußere Abschnitt des Elastomerteils 42 hat eine radiale Wanddicke Sₐ, wobei Sᵢ und Sₐ etwa den gleichen Wert haben. Die größte Radialerstrekkung S des Vorsprungs 46, die sich beim gezeigten Ausführungsbeispiel aufgrund der konischen Ausgestaltung des Vorsprungs 46 an dessen Basis findet, beträgt hier etwa 50 % der Summe der Wanddicken Sᵢ und Sₐ. Wie ebenfalls aus Fig. 3 zu ersehen, sind auf der freien Stirnfläche des Elastomerteils 42 eine Reihe kalottenförmiger Erhebungen 49 einstückig mit dem Elastomerteil 42 ausgeformt. Jede kalottenförmige Erhebung 49 ist genau über einem der stiftförmigen Fortsätze 48 des Vorsprungs 46 angeordnet.

Die aufgrund der separaten Ausbildung kostengünstig getrennt herstellbaren Teile 42 und 44 des Dichtelements 16 sind durch Zusammenfügen lösbar miteinander verbunden. Das Dichtelement 16, dessen Teil 44 im dargestellten Beispiel einen einstückig angeformten, hohlzylindrischen Fortsatz 50 zur besseren Führung des Betätigungsfortsatzes 38 aufweist, wird durch einen in einer Umfangsnut angeordneten Sprengring 52 in dem stufenförmig erweiterten Endabschnitt der Bohrung 14 des Hauptzylinders 10 gehalten.

Die Funktion des dargestellten Hauptzylinders 10 ist wie folgt: Ausgehend von der gezeigten Ausgangsstellung aller Teile wird bei einer durch den Fahrer erfolgenden Betätigung der Bremsanlage über das nicht dargestellte, stangenförmige Eingangsglied, welches mit dem Betätigungsfortsatz 38 des Kolbens 18 verbunden ist, der Kolben 18 relativ zum Gehäuse 12 des Hauptzylinders 10 bezogen auf die Figur nach links verschoben. Der Querstift 34, der im unbetätigten Zustand des Hauptzylinders das Zentralventil 20 offenhält, löst sich dabei von der Anschlagringscheibe 40 und das federnd in Schließrichtung vorgespannte Zentralventil 20 schließt sich, wonach entsprechend der weiteren axialen Verschiebung des Kolbens 18 Fluiddruck in der Druckkammer 28 aufgebaut wird. Während einer solchen Betätigung des Hauptzylinders 10 übernimmt das Dichtelement 16 sowohl die Abdichtung der Bohrung 14 gegenüber dem Betätigungsfortsatz 38 als auch dessen Führung.

Die Entspannungsbewegung beim Lösen der Bremse erfolgt entsprechend in umgekehrter Reihenfolge, d.h. der Kolben 18 verschiebt sich unter der Wirkung der Rückstellfeder 30 bezogen auf die Figur nach rechts und der Querstift 34 kommt kurz vor Erreichen der Ruhestellung des Kolbens 18 in Anlage mit der Anschlagringscheibe 40, so daß sich das Zentralventil 20 wieder öffnet und ein eventuell vorhandener, geringer Restdruck in der Druckkammer 28 über die Nachlaufbohrung 26 in das nicht dargestellte Fluidreservoir abgelassen wird.

Im folgenden soll davon ausgegangen werden, daß kurz vor einer durch den Fahrer erfolgenden Bremsbetätigung ein Antischlupfregelzyklus abgelaufen ist, im Rahmen dessen automatisch ein zusätzliches Fluidvolumen aus dem Fluidreservoir der Druckkammer 28 zugeführt wurde, um Bremsdruck zur Reduzierung des Radschlupfes bereitzustellen. Wird direkt im Anschluß an einen solchen Antischlupfregelzyklus eine Bremsbetätigung vom Fahrer eingeleitet, muß das Zentralventil 20 am Ende der Bremsung gegen einen zum Teil erheblichen Überdruck geöffnet werden, da eine Druckentspannung in der Druckkammer 28 durch eine Rückführung des während des Antischlupfregelzyklus zugeführten, zusätzlichen Fluidvolumens in das Fluidreservoir vor der direkt anschließenden, vom Fahrer eingeleiteten Bremsbetätigung nicht mehr möglich war. Je nachdem, wie groß das während des Antischlupfregelzyklus zugeführte Fluidvolumen war, herrscht also selbst dann in der Druckkammer 28 noch ein mehr oder weniger großer Überdruck, wenn der Kolben 18 nach Beendigung der vom Fahrer eingeleiteten Bremsbetätigung wieder in seine Ausgangsstellung zurückgekehrt ist. Auch in einem solchen Fall verändert sich jedoch der Öffnungszeitpunkt des Zentralventils 20 nur unwesentlich, da der aus der Druckkammer 28 über den Querstift 34 und die Anschlagringscheibe 40 auf die Stirnfläche des Elastomerteils 42 übertragene Druck aufgrund der nur sehr geringen Komprimierbarkeit der auf dem Vorsprung 46 angeordneten, dünnen Schicht D aus Elastomermaterial nahezu verzögerungsfrei auf die Kopfflächen der stiftförmigen Fortsätze 48 des am Teil 44 ausgebildeten Vorsprungs 46 wirkt. Das starre Material des Teils 44 gestattet keine weitere axiale Verlagerung der Anschlagringscheibe 40 und damit auch des Querstiftes 34, so daß das Zentralventil 20 auch gegen hohen Überdruck zuverlässig und unter Einhaltung eines genau definierten Öffnungspunktes in bezug auf die Stellung des Kolbens 18 öffnet.

Das in Fig. 3 gezeigte Dichtelement 16' unterscheidet sich von dem in der zuvor beschriebenen ersten Ausführungsform verwendeten Dichtelement 16 lediglich dadurch, daß anstelle der stiftförmigen Fortsätze 48 ein einziger, kreisringförmig geschlossener Fortsatz 54 vorhanden ist, der eine gegenüber dem darunter angeordneten Teil des Vorsprungs 46 geringere Querschnittsabmessung aufweist. Die kalottenförmigen Erhebungen 49 sind auf der Stirnfläche des Elastomerteils 42 über dem Fortsatz 54 in Umfangsrichtung gleichmäßig voneinander beabstandet angeordnet. Die Funktion des Dichtelements 16' entspricht derjenigen des Dichtelements 16.

## Patentansprüche

1. Ringförmiges Dichtelement zum dichtenden Verschließen eines Ringspaltes zwischen der Innenfläche einer zylindrischen Wandung und einem relativ zu dieser axial verschiebbaren, konzentrisch dazu angeordneten zylindrischen Kolben, wobei das ringförmige Dichtelement zwei kreisringförmige und sich axial aneinander anschließende Teile (42, 44) aufweist, von denen das erste Teil (42) aus einem Elastomermaterial und das zweite Teil (44) aus einem starren Material besteht, wobei das Teil (44) aus starrem Material einen einstückig mit ihm ausgebildeten, ringförmigen und das zweite Teil (42) axial nur nahezu vollständig durchsetzenden Vorsprung (46) mit einer Radialerstrekkung S aufweist, der so ausgebildet und angeordnet ist, daß ein an seiner radial inneren Flanke anliegender Abschnitt des zweiten Teils (42) eine radiale Wanddicke Sᵢ und ein an seiner radial äußeren Flanke anliegender Abschnitt des zweiten Teils (42) eine radiale Wanddicke Sₐ aufweist, und wobei das Teil (42) aus Elastomermaterial die Stirnfläche des Vorsprungs (46) vollständig überdeckt,
dadurch kennzeichnet, daß
- die beiden Teile (42, 44) lösbar miteinander verbunden sind,
- die Wanddicke Sᵢ etwa gleich der Wanddicke Sₐ ist, und
- die Radialerstreckung S des Vorsprungs (46) höchstens 70 % der Summe der Wanddicken Sᵢ + Sₐ beträgt.

2. Ringförmiges Dichtelement nach Anspruch 1,
**dadurch gekennzeichnet, daß** die Radialerstreckung S des Vorsprungs (46) höchstens 50 % der Summe der Wanddicken Sᵢ + Sₐ beträgt.

3. Ringförmiges Dichtelement nach Anspruch 1 oder 2,
**dadurch gekennzeichnet, daß** der ringförmig umlaufende Vorsprung (46) des Teils (44) aus starrem Material die Form eines geschlossenen Kreisrings hat.

4. Ringförmiges Dichtelement nach Anspruch 1 oder 2,
**dadurch gekennzeichnet, daß** der ringförmig umlaufende Vorsprung (46) des Teils (44) durch mehrere Kreisringsegmente gebildet ist, zwischen denen Platz für Verbindungsstege gelassen ist.

5. Ringförmiges Dichtelement nach einem der vorhergehenden Ansprüche,
**dadurch gekennzeichnet, daß** das freie Ende des Vorsprungs (46) von einer Reihe stiftförmiger Fortsätze (48) gebildet ist, die in Umfangsrichtung voneinander vorzugsweise gleichmäßig beabstandet sind und sich axial erstrecken.

6. Ringförmiges Dichtelement nach einem der vorhergehenden Ansprüche,
**dadurch gekennzeichnet, daß** das Teil (42) aus Elastomermaterial auf seiner Stirnfläche mehrere in Umfangsrichtung voneinander beabstandete, kalottenförmige Erhebungen (49) aufweist.

7. Ringförmiges Dichtelement nach Anspruch 5 und 6,
**dadurch gekennzeichnet, daß** die kalottenförmigen Erhebungen (49) in axialer Fortsetzung der stiftförmigen Fortsätze (48) angeordnet sind.

8. Ringförmiges Dichtelement nach einem der vorhergehenden Ansprüche,
**dadurch gekennzeichnet, daß** die Radialerstreckung S des Vorsprungs (46) sich zu dessen freiem Ende hin verringert.

9. Ringförmiges Dichtelement nach Anspruch 8,
**dadurch gekennzeichnet, daß** die Verringerung der Radialerstrekkung S des Vorsprungs (46) stufenweise oder kontinuierlich erfolgt.

10. Ringförmiges Dichtelement nach einem der vorhergehenden Ansprüche,
**dadurch gekennzeichnet, daß** das Teil (44) aus starrem Material auf seiner von dem Teil (42) aus Elastomermaterial abgekehrten Stirnseite einen hohlzylindrischen Fortsatz (50) aufweist.

11. Hauptzylinder (10) für eine hydraulische Fahrzeugbremsanlage mit einem Gehäuse (12), das eine sich entlang einer Längsachse (A) erstreckende Bohrung (14) aufweist, deren eines Ende von einer zum Gehäuse (12) des Hauptzylinders (10) gehörenden Stirnwand und deren anderes, gegenüberliegendes Ende durch ein Verschlußelement (16) abdichtend verschlossen ist, wobei in der Bohrung (14) benachbart zu dem Verschluß-element (16) ein durch dieses hindurch betätigbarer Kolben (18) abdichtend und axial verschieblich aufgenommen ist, der ein Zentralventil (20) aufweist, das eine Fluidverbindung zwischen einem Fluidreservoir und einer in der Bohrung (14) durch die Stirnwand und den Kolben (18) begrenzten Druckkammer (28) ermöglicht, und das bei unbetätigtem Kolben (18) durch ein auf das Verschlußelement (16) wirkendes Anlagebauteil (Querstift 34) in Offenstellung gehalten ist,
**dadurch gekennzeichnet, daß**
das Verschlußelement (16) ein ringförmiges Dichtelement gemäß einem der vorhergehenden Ansprüche ist.

## Claims

1. An annular sealing element for sealing an annular gap between the inner surface of a cylindrical wall and a cylindrical piston which can be displaced axially relative to said wall and is arranged concentrically therewith, wherein the annular sealing element has two annular and axially adjoining parts (42, 44), of which the first part (42) consists of an elastomer material and the second part (44) consists of a rigid material, wherein the part (44) made of rigid material has an annular protrusion (46) which is formed integrally with it, projects axially nearly completely into the second part (42), has a radial extent S and is designed and arranged such that a section of the second part (42) which abuts against the radially inner flank of said protrusion has a radial wall thickness Sᵢ and that a section of the second part (42) which abutts against the radially outer flank of said protrusion has a radial wall thickness Sₐ, and wherein the part (42) made of elastomer material covers completely the front end face of the protrusion (46),
**characterised in that**
- the two parts (42, 44) are connected to one another in a releasable manner,
- the wall thickness Sᵢ is approximately equal to the wall thickness Sₐ, and
- the radial extent S of the protrusion (46) is at most 70% of the sum of the wall thicknesses Sᵢ + Sₐ.

2. The annular sealing element according to Claim 1,
**characterised in that** the radial extent S of the protrusion (46) is at most 50% of the sum of the wall thicknesses Sᵢ + Sₐ.

3. The annular sealing element according to Claim 1 or 2,
**characterised in that** the annular protrusion (46) which runs around the part (44) made of rigid material has the shape of a closed circular ring.

4. The annular sealing element according to Claim 1 or 2,
**characterised in that** the annular protrusion (46) which runs around the part (44) is formed by several ring segments wsith spaces left between them for connecting webs.

5. The annular sealing element according to one of the preceding Claims,
**characterised in that** the free end of the protrusion (46) is formed by a series of stud-like continuations (48) which are spaced apart from one another preferably uniformly in the circumferential direction and extend in the axial direction.

6. The annular sealing element according to one of the preceding claims,
**characterised in that** the part (42) of elastomer material has on its front end face several dome-like elevations (49) which are spaced apart in the circumferential direction.

7. The annular sealing element according to Claims 5 and 6,
**characterised in that** the dome-like elevations (49) are arranged in axial extension of the stud-like continuations (48).

8. The annular sealing element according to one of the preceding Claims,
**characterised in that** the radial extent S of the protrusion (46) decreases toward the free end of the latter.

9. The annular sealing element according to Claim 8,
**characterised in that** the decrease in the radial extent S of the protrusion (46) takes place continuously or in a stepwise manner.

10. The annular sealing element according to one of the preceding Claims,
**characterised in that** on its front end side which is directed away from the part (42) made of elastomer material, the part (44) made of rigid material has a hollow-cylindrical continuation (50).

11. A main cylinder (10) for a hydraulic vehicle braking system, comprising a housing (12) which has a bore (14), which extends along a longitudinal axis (A) and of which one end is sealed by a front end wall belonging to the housing (12) of the main cylinder (10) and the other, opposite end is sealed by a closure element (16), wherein in the bore (14), adjacent to the closure element (16), a piston (18) is accommodated in a sealing and axially displaceable manner which can be actuated through said closure element and has a central valve (20) which permits a fluid connection between a fluid reservoir and a pressure chamber (28), delimited in the bore (14) by the front end wall and the piston (18), and which, when the piston (18) is not actuated, is kept in the open position by an abutment component (transverse pin 34) which acts on the closure element (16),
**characterised in that** the closure element (16) is an annular sealing element according to one of the preceding claims.

## Revendications

1. Elément d'étanchéité annulaire pour fermer hermétiquement un interstice annulaire entre une surface intérieure d'une paroi cylindrique et un piston cylindrique disposé de façon concentrique à celle-ci et pouvant coulisser axialement par rapport à celle-ci, l'élément d'étanchéité annulaire présentant deux parties annulaires circulaires et se raccordant axialement entre elles (42, 44) dont la première partie (42) se compose d'un matériau élastomère et la deuxième partie (44) se compose d'un matériau rigide, la partie en matériau rigide (44) présentant une partie en saillie (46) annulaire formée d'une seule pièce avec elle et traversant axialement seulement presque complètement la deuxième pièce (42) et présentant une étendue radiale S, qui est configurée et disposée de telle façon qu'une portion de la deuxième partie (42) s'appliquant contre son flanc radialement intérieur présente une épaisseur radiale de paroi Sᵢ et une portion de la deuxième partie (42) s'appliquant contre son flanc radialement extérieur une épaisseur radiale de paroi Sₐ et la partie en matériau élastomère (42) recouvrant complètement la face frontale de la partie en saillie (46)
**caractérisé en ce que**
- les deux parties (42, 44) sont reliées entre elles de façon détachable,
- l'épaisseur de paroi Sᵢ est sensiblement la même que l'épaisseur de paroi Sₐ, et
- l'étendue radiale S de la partie en saillie (46) se monte au plus à 70 % de la somme des épaisseurs de parois Sᵢ + Sₐ.

2. Elément d'étanchéité annulaire selon la revendication 1,
**caractérisé en ce que** l'étendue radiale S de la partie en saillie (46) se monte au plus à 50 % de la somme des épaisseurs de parois Sᵢ + Sₐ.

3. Elément d'étanchéité annulaire selon la revendication 1 ou 2,
**caractérisé en ce que** la partie en saillie (46) périphérique annulaire de la partie en matériau rigide (44) a la forme d'un anneau circulaire fermé.

4. Elément d'étanchéité annulaire selon la revendication 1 ou 2,
**caractérisé en ce que** la partie en saillie (46) périphérique annulaire de la partie (44) est formée de plusieurs segments annulaires circulaires entre lesquels il y a place pour des tiges de liaison.

5. Elément d'étanchéité annulaire selon l'une quelconque des revendications précédentes,
**caractérisé en ce que** l'extrémité libre de la partie en saillie (46) est formée d'une suite de prolongements (48) en forme de broches qui sont de préférence régulièrement espacés et s'étendent axialement.

6. Elément d'étanchéité annulaire selon l'une quelconque des revendications précédentes,
**caractérisé en ce que** la partie en matériau élastomère (42) présente sur sa surface frontale plusieurs renflements (49) en forme de calottes espacés périphériquement l'un de l'autre.

7. Elément d'étanchéité annulaire selon la revendication 5 ou 6,
**caractérisé en ce que** les renflements (49) en forme de calottes sont disposés en continuation axiale des prolongements (48) en forme de broches.

8. Elément d'étanchéité annulaire selon l'une quelconque des revendications précédentes,
**caractérisé en ce que** l'étendue radiale S de la partie en saillie (46) se réduit vers son extrémité libre.

9. Elément d'étanchéité annulaire selon la revendication 8,
**caractérisé en ce que** la réduction de l'étendue radiale S de la partie en saillie (46) a lieu par étages ou de façon continue.

10. Elément d'étanchéité annulaire selon l'une quelconque des revendications précédentes,
**caractérisé en ce que** la partie en matériau rigide (44) présente sur sa face frontale opposée à la partie en matériau élastomère (42) présente un prolongement (50) cylindrique creux.

11. Maître cylindre (10) pour un système de freinage de véhicule comprenant un boîtier (12) qui présente un alésage (14) s'étendant suivant un axe longitudinal (A), dont une extrémité est fermée par une paroi frontale appartenant au boîtier (12) du maître cylindre (10) et dont l'extrémité opposée est fermée hermétiquement par un élément d'obturation (16), un piston (18) étant loge de façon à pouvoir coulisser axialement dans l'alésage (14) à proximité de l'élément d'obturation (16) et pouvant être actionné à travers ce dernier, une étanchéité étant réalisée entre le piston et l'alésage, le piston présentant une soupape centrale (20) qui permet une communication de fluide entre un réservoir de fluide et une chambre de pression (28) délimitée dans l'alésage (14) par la paroi frontale et le piston (18) et qui, lorsque le piston (18) n'est pas actionné, est maintenue en position ouverte par une pièce annexée (broche transversale 34) agissant sur l'élément d'obturation (16),
**caractérisé en ce que**
l'élément d'obturation (16) est un élément d'étanchéité selon l'une quelconque des revendications précédentes.
